**Europäisches Patentamt**

**European Patent Office**

**Office européen des brevets**

(19)

(11) Veröffentlichungsnummer: **0 235 573 B1**

# EUROPÄISCHE PATENTSCHRIFT

(12)

(45) Veröffentlichungstag der Patentschrift: **20.05.92**

(51) Int. Cl.⁵: **H04N 9/44**

(21) Anmeldenummer: **87101158.1**

(22) Anmeldetag: **28.01.87**

(54) **Schaltungsanordnung zur Erzeugung eines Taktsignals.**

(30) Priorität: **06.02.86 DE 3603621**

(43) Veröffentlichungstag der Anmeldung:
**09.09.87 Patentblatt 87/37**

(45) Bekanntmachung des Hinweises auf die
Patenterteilung:
**20.05.92 Patentblatt 92/21**

(84) Benannte Vertragsstaaten:
**AT BE CH DE ES FR GB IT LI LU NL SE**

(56) Entgegenhaltungen:
**US-A- 4 463 371**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Berland, Axel-Pierre
Am Kopsbühl 64
W-7730 Villingen-Schwenningen(DE)**
Erfinder: **Rufray, Jean-Claude
Hans-Thoma-Strasse 6
W-7734 Brigachtal(DE)**

**Beschreibung**

Die Erfindung geht aus von einer Schaltungsanordnung zur Erzeugung eines mit der Zeilenfrequenz verkoppelten Taktsignals zur Decodierung digitalisierter Fernsehsignale unter Verwendung einer ersten phasengeregelten Oszillatorschaltung (PLL), der eine mit Hilfe einer zweiten phasengeregelten Oszillatorschaltung erzeugte Referenzfrequenz zugeführt wird.

Bei der Verarbeitung von digitalen Signalen, insbesondere bei der Digitalisierung von Videosignalen, ist wichtige Voraussetzung, daß der Takt zur Steuerung der digitalen Schaltungen sowohl in Frequenz als auch in der Phasenlage mit der Zeilenfrequenz verkoppelt ist. Damit ist gewährleistet, daß sowohl von Zeile zu Zeile als auch von Halbbild zu Halbbild immer an den gleichen Punkten die Momentwerte gebildet werden. Die Taktfrequenz liegt bei einer Übertragungsbreite von 6 MHz nach dem Abtasttheorem zwischen 10 und 20 MHz. Die vorgeschlagene Norm sieht hierfür eine Frequenz von 13,5 MHz vor. Die Synchronisation der Taktfrequenz kann nur während des unsichtbaren Teils, während des Zeilenrücklaufs, erfolgen, wobei der Taktoszillator während des Zeilenhinlaufs frei schwingt. Wenn das Verhältnis von Takt- und Zeilenfrequenz sehr groß ist und die Taktfrequenz nicht genügend stabil, besteht die Gefahr von Jitter-Erscheinungen während des Zeilenhinlaufs, wodurch die Regelung während der Zeile in nachteiliger Weise beeinträchtigt wird. Wenn man die Taktfrequenz mit Hilfe einer quarzgesteuerten PLL-Schaltung erzeugen würde, gäbe es keine Einstellmöglichkeit zur Frequenzänderung, wenn z.B. die Zeilenfrequenz von der Norm abweicht, wie dies bei Signalen aus einem Videorecorder der Fall ist. Die Zeilenfrequenz darf bei derartigen Geräten um +/- 1 % abweichen. Es muß deshalb die Einstellung der Taktfrequenz möglich sein, damit sie synchron zur Zeilenfrequenz des zu verarbeitenden Signals wird, um Jitter zu vermeiden.

Es ist z.B. vorgeschlagen worden, die geforderte Taktfrequenz mit Hilfe einer quarzgesteuerten PLL-Schaltung zu erzeugen, indem die Taktfrequenz durch Teilung und anschliessende Multiplikation gewonnen wird (IEEE International Conference on Consumer Electronics, 7.6.1985, Session XVII Digital T.V.). Dies ist aber mit einem großen Schaltungsaufwand verbunden.

In der US-A-4463371 ist eine Schaltungsanordnung gezeigt, die zur Decodierung digitalisierter Fernsehsignale dient, wobei die Taktfrequenz mit Hilfe einer PLL-Schaltung erzeugt wird. Dieser PLL-Schaltung ist eine zweite PLL-Schaltung zugeordnet, welche die Referenzfrequenz für die erste PLL-Schaltung erzeugt. Diese Referenzfrequenz ist mit dem Burst-Signal des Farbsignals verkoppelt. Dieses Burst-Signal besitzt aber eine hohe Frequenz von 4,43 MHz, zu dessen Erzeugung als Referenzfrequenz ein teurer Quarz notwendig ist.

Der Erfindung liegt die Aufgabe zugrunde, mit geringem Schaltungsaufwand eine mit der Zeilenfrequenz eines Videosignals verkoppelte Taktfrequenz zu erzeugen, deren Wert sich automatisch an die anliegende mit Toleranzen behaftete Zeilenfrequenz anpasst. Diese Aufgabe wird durch die im Patentanspruch angegebene Lehre gelöst. Weitere vorteilhafte Ausgestaltungen der Erfindung sind in den abhängigen Ansprüchen beschrieben.

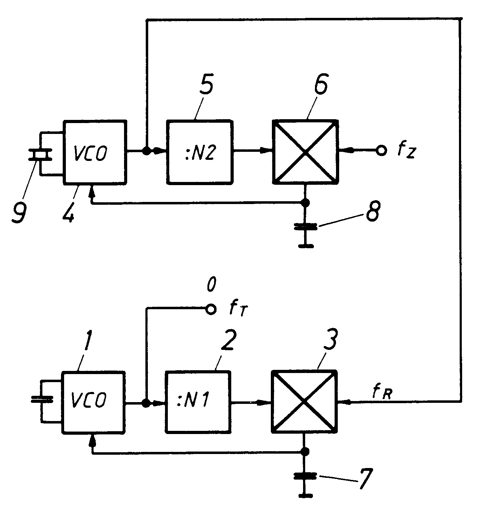

Nachstehend wird das Wesentliche der Erfindung an einem Ausführungsbeispiel mit Hilfe der Zeichnung erläutert.

Zur Erzeugung der Taktfrequenz fT am Ausgang O dient eine PLL-Schaltung, die aus einem spannungsgesteuerten Oszillator 1, einem Frequenzteiler 2 und einem Phasenkomparator 3 besteht. Dem Phasenkomparator 3 wird in an sich bekannter Weise die geteilte Frequenz fT/N1 und eine Referenzfrequenz fR zugeführt. Aus dem Phasenvergleich resultiert eine Steuerspannung für den Oszillator 1. Die Referenzfrequenz fR wird mit Hilfe einer zweiten PLL-Schaltung erzeugt, die aus einem zweiten spannungsgesteuerten Oszillator 4, einem zweiten Frequenzteiler 5 und einem zweiten Phasenkomparator 6 besteht. Diese zweite PLL-Schaltung erzeugt die mit der Zeilenfrequenz fZ fest verkoppelte Frequenz fR. Dem Phasenkomparator 6 wird als Referenzfrequenz die zeilenfrequenz fZ sowie die heruntergeteilte Frequenz fR/N2 zugeführt. Der Oszillator 4 liefert durch den Keramikschwinger 9 eine sehr stabile Frequenz fR für die erste PLL-Schaltung. Der erste Oszillator 1, der z.B. eine Taktfrequenz von 13,5 MHz liefert, wird mit Hilfe der Referenzfrequenz von 500 kHz geregelt Durch das kleine Frequenzverhältnis fT/fR < 100 ist eine hohe Stabilität gewährleistet. Die durch den Kondensator 8 gegebene Zeitkonstante T2 der zweiten PLL-Schaltung 4, 5, 6 ist größer als durch den Kondensator 7 gegebene Zeitkonstante T1 der ersten PLL-Schaltung 1, 2, 3. So ist es vorteilhaft, die wenn Zeitkonstante T2 der PLL-Schaltung 4, 5, 6 in der Größenordnung von fünf bis zwanzig Perioden der Zeilenfrequenz liegt. Bei einer Zeilenfrequenz von 15.625 KHz liegt der Wert für T2 dann bei 320 $\mu$s bis 1280 $\mu$s. Die Zeitkonstante T1 der PLL-Schaltung 1, 2, 3 liegt dann im Verhältnis zum Faktor N2 des Frequenzteilers 5 niedriger. Im erwähnten Beispiel mit N2 = 32 liegt der Wert für die Zeitkonstante T1 zwischen 10 $\mu$s und 40 $\mu$s. Der Fangbereich der zweiten PLL-Schaltung 4, 5, 6 kann durch den Keramikschwinger 9 klein sein. Da die erste PLL-Schaltung eine kleinere Zeitkonstante T1 besitzt, kann ein normaler spannungsgesteuerter Oszillator ohne Zuhilfenahme eines teuren Schwingelements (z.B. Keramik oder Quarz) verwendet werden. Der erste Oszillator 1 braucht deshalb auch nicht von aussen einstellbar zu sein, weil sich die der ersten PLL-Schaltung zugeführte Referenzfrequenz fR entsprechend den Abweichungen der Zeilenfrequenz fZ ändert.

Zur Erzeugung einer Taktfrequenz von z.B. 13,5 MHz wird der zweite Oszillator 4 mit Hilfe eines auf 503 kHz schwingenden Keramikschwingers auf 500 kHz eingestellt, indem diese durch den Faktor N2 = 32 geteilt mit der Zeilenfrequenz fz = 15.625 KHz verglichen wird. Die so erzeugte Referenzfrequenz fR wird mit der durch den Faktor N1 = 27 geteilten Frequenz fT verglichen. Die Referenzfrequenz fR wird sich bei Abweichungen der Zeilenfrequenz um +/- 1 % immer derart einstellen, daß sie in der ersten PLL-Schaltung eine Taktfrequenz von 13,5 MHz erzeugt.

Die Erfindung ist besonders gut geeignet zur Erzeugung einer stabilen Taktfrequenz zur Dekodierung von Videotextsignalen. Es wird dadurch ein teurer Quarz eingespart. Die genaue Zeilenfrequenz des Fernsehsenders wird als Referenzfrequenz benutzt. Die Verwendung eines keramischen Schwingers erlaubt eine genügende Störbefreiung.

## Patentansprüche

1. Schaltungsanordnung zur Erzeugung eines mit einem Fernsehsignal verkoppelten Taktsignals zur Decodierung digitalisierter Fernsehsignale unter Verwendung einer ersten phasengeregelten Oszillatorschaltung (PLL), der eine mit Hilfe einer zweiten phasengeregelten Oszillatorschaltung erzeugte Referenzfrequenz zugeführt wird, **dadurch gekennzeichnet,** daß das Taktsignal mit der Zeilenfrequenz ($f_Z$), die eine Abweichung von ± 1% aufweisen kann, verkoppelt ist und daß die Referenzfreiquenz ($f_R$) für die erste phasengeregelte Oszillatorschaltung (1, 2, 3) ein ganzzahliges Vielfaches der Zeilenfrequenz ($f_Z$) der Fernsehsignale und das Verhältnis der Taktsignal-Frequenz ($f_T$) zu Referenzfrequenz ($f_R$) kleiner als 100 ist und daß die Zeitkonstante ($T_2$) des Regelkreises der zweiten phasengeregelten Oszillatorschaltung größer als die Zeitkonstante ($T_1$) des Regelkreises der ersten phasengeregelten Oszillatorschaltung ist und daß der Fangbereich für die zweite phasengeregelte Oszillatorschaltung kleiner als der Fangbereich für die erste phasengeregelte Oszillatorschaltung ist und daß die erste phasengeregelte Oszillatorschaltung einen Keramikschwinger aufweist.

2. Schaltungsanordnung nach Anspruch 1, **dadurch gekennzeichnet,** daß die digitalisierten Fernsehsignale Videotext-Signale sind.

3. Schaltungsanordnung nach Anspruch 1 oder 2, **dadurch gekennzeichnet,** daß die erste phasengeregelte Oszillatorschaltung einen ersten Frequenzteiler (2) mit dem Teilerfaktor $N_1$ = 27 und die zweite phasengeregelte Oszillatorschaltung einen zweiten Frequenzteiler (5) mit dem Teilerfaktor $N_2$ = 32 enthält und daß die Zeitkonstante ($T_2$) des Regelkreises der zweiten phasengeregelten Oszillatorschaltung im Bereich von 5 bis 20 Perioden der Zeilenfrequenz ($f_Z$) liegt.

## Claims

1. A circuit arrangement for producing a clock signal coupled to a television signal, for decoding digitalised television signals while using a first phase-regulated oscillator circuit (PLL) to which is supplied a reference frequency produced with the aid of a second phase-regulated oscillator circuit, **characterised in that** the clock signal is coupled to the line frequency ($f_Z$) which may have a deviation of +/- 1%, and that the reference frequency ($f_R$) for the first phase-regulated oscillator circuit (1,2,3) is a whole-numbered multiple of the line frequency ($f_Z$) of the television signals and the ratio between the clock signal frequency ($f_T$) and the reference frequency ($f_R$) is less than 100 and that the time constant ($T_2$) of the regulating circuit of the second phase-regulated oscillator circuit is greater than the time constant ($T_1$) of the regulating circuit of the first phase-regulated oscillator circuit and that the capture range for the second phase-regulated oscillator circuit is smaller than the capture range for the first phase-regulated oscillator circuit and that the first phase-regulated oscillator circuit has a ceramics oscillator.

2. A circuit arrangement according to claim 1, **characterised in that** the digitalised television signals are video text signals.

3. A circuit arrangement according to claim 1 or 2, **characterised in that** the first phase-regulated oscillator circuit includes a first frequency divider (2) with the divider factor $N_1$ = 27 and the second phase-regulated oscillator circuit includes a second frequency divider (5) with the divider factor $N_2$ = 32 and that the time constant ($T_2$) or the regulating circuit of the second phase-regulated oscillator circuit is in the region of 4 to 20 periods of the line frequency ($f_Z$).

**Revendications**

1. Dispositif de circuit pour produire un signal de synchronisation couplé à un signal de télévision pour décoder des signaux de télévision numérisés en utilisant un premier circuit à oscillateur à réglage de phase (PLL - à verrouillage de phase) auquel une fréquence de référence produite à l'aide d'un second circuit à oscillateur à réglage de phase est amenée, caractérisé en ce que le signal de synchronisation est couplé à la fréquence ligne ($f_Z$) qui peut présenter un écart de +/- 1% (et que la fréquence de référence ($f_R$) pour le premier circuit à oscillateur à réglage de phase (1, 2, 3) est Un multiple entier de la fréquence ligne ($f_Z$) des signaux de télévision et que le rapport de la fréquence du signal de synchronisation ($f_T$) et de la fréquence de référence ($f_R$) est inférieur à 100 et que la constante de temps ($T_2$) de la boucle d'asservissement du second circuit à oscillateur à réglage de phase est supérieur à la constante de temps ($T_1$) de la boucle d'asservissement du premier circuit à oscillateur à réglage de phase et que la plage de capture pour le second circuit à oscillateur à réglage de phase est inférieur à la plage de capture pour le premier circuit à oscillateur à réglage de phase et que le premier circuit à oscillateur à réglage de phase présente un oscillateur céramique.

2. Dispositif de circuit selon la revendication 1, caractérisé en ce que les signaux de télévision numérisés sont des signaux de vidéotexte.

3. Dispositif de circuit selon la revendication 1 ou 2, caractérisé en ce que le premier circuit à oscillateur à réglage de phase contient un premier diviseur de fréquence (2) avec le facteur de division $N_1$ = 27 et que le second circuit à oscillateur à réglage de phase contient un second diviseur de fréquence (5) avec le facteur de division $N_2$ = 32 et que la constante de temps ($T_2$) de la boucle d'asservissement du second circuit à oscillateur à réglage de phase se situe dans une zone de 5 à 20 périodes de la fréquence ligne ($f_Z$).